# EUROPEAN PATENT APPLICATION

(11) **EP 1 498 339 A2**
(43) Date of publication of application: **19.01.2005**
(21) Application number: 04001867.3
(22) Date of filing: 29.01.2004
(51) Int. Cl.: B62B 1/18

(54) **Double-walled plastic-based and polyurethane-reinforced wheelbarrow**

(30) Priority: 17.07.2003 TR 200301130
(71) Applicant: Azgüler Cevre Temizlik Ins. San. Ve Tic. Ltd. Sti., Izmir (TR)
(72) Inventor: Azgüler, Aydin, Izmir (TR)
(74) Representative: Gürsoy, Mehmet Bahadir

(57) **Abstract**

The present invention relates to a wheelbarrow comprising a body (4); legs (2) and carrying arms (6) connected to the body (4); a wheel (3) and a wheel frame (9) connecting said wheel (3) to said body (4); characterized in that said body (4) comprises a double-wall structure (8) made of plastic material, and in that polyurethane (5) material is incorporated in between the walls (8).

## Description

### Technical Field

The present invention relates to a wheelbarrow body embodiment made preferably of a plastic material with a double-wall structure, and reinforced with polyurethane in between said walls.

Wheelbarrows are being employed both with industrial and household purposes to transport and temporarily keep various solid-based materials such as sands, stones, aggregates, etc. and various liquid-based chemicals such as abrasive materials and solvents in many sectors such as construction, mining, chemistry, etc.

Wheelbarrows, in order to fulfill such purposes, are constructed with metallic- or plastic-based materials to technically demonstrate the expected characteristics including resistance against external strokes, against chemical decomposition, and UV filtering of sun rays.

### Background of Invention

The present invention provides a wheelbarrow made of polyethylene material and reinforced with polyurethane to adequately ensure resistance against external strokes, chemical resistance, and to provide UV-ray filtration.

Since metallic material based wheelbarrows of the prior art show a relatively low chemical resistance, transported or kept materials with/in such kind wheelbarrows undergo chemical reactions with their body, thereby indispensably leading to decomposition in their metallic structure. It is also obvious that such kind metallic material based wheelbarrows are impractical due to their heaviness and are affected further by UV rays.

Regarding plastic material based wheelbarrows; they are constructed with a single wall structure and show relatively low resistance against external strokes. Considering the application fields like the construction sector where intense and high external factors a re implicated, such kind of w heelbarrows are exposed to loads leading to permanent deformations thereon, in spite of the fact that plastic materials are relatively elastic.

### Description of Invention

The objective of the present invention is to embody a wheelbarrow with enhanced resistance against chemical and mechanical effects.

In order to realize this objective, the novel wheelbarrow is characterized in that the body part of said wheelbarrow is made of plastic material with a double-wall structure, and in that said body is reinforced with polyurethane material comprised in between said walls.

Said plastic material employed in the wheelbarrow under the present invention is preferably polyethylene, whereas equivalent plastic materials can alternatively be used as well.

### Description of Figures

The present invention is to be considered together with the appended figures described below to best understand the embodiment and the advantages provided with the present invention.

Figure 1 is a side view of the wheelbarrow embodied under the present invention.

Figure 2 is a front view of the wheelbarrow embodied under the present invention.

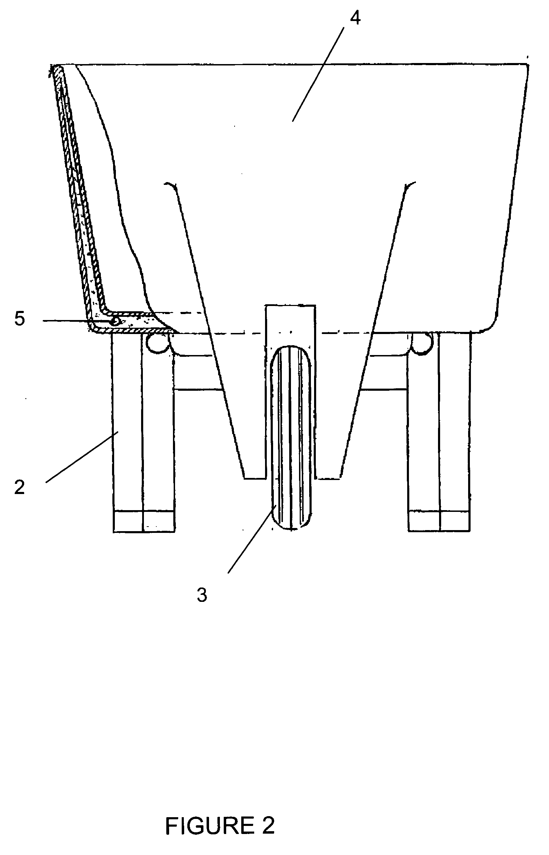

Figure 2 is a top view of the wheelbarrow embodied under the present invention.

### Reference Numbers of Parts in Figures

1. Leg shoe;
2. leg;
3. wheel;
4. body;
5. polyurethane;
6. arm;
7. handle;
8. double-wall structure;
9. wheel frame; and
10. stroke shoe.

### Detailed Description of Invention

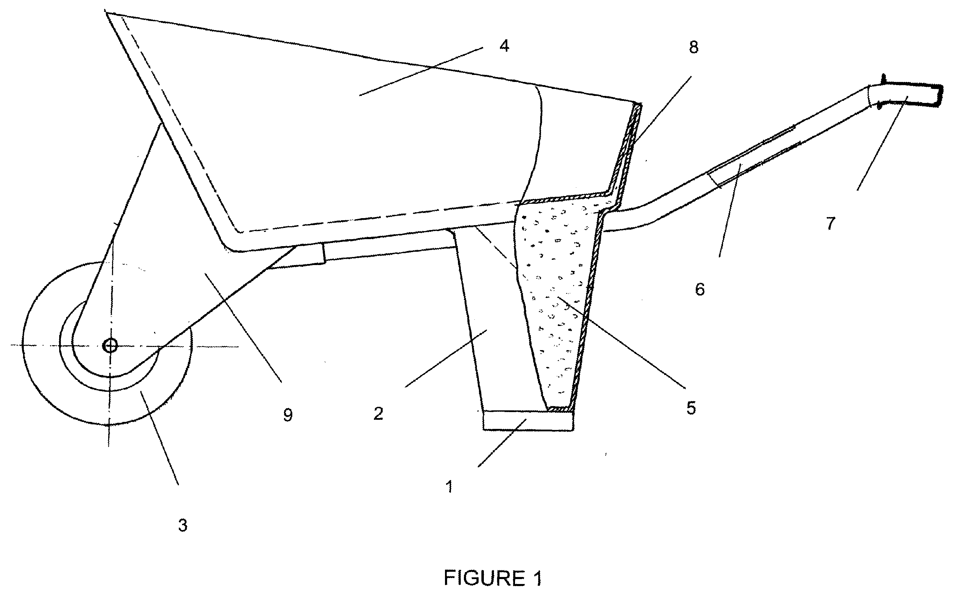

Figure 1 illustrates a side view of the wheelbarrow embodied under the present invention. Accordingly, the subject wheelbarrow comprises a body (4) whereby and wherein materials are transported and kept, respectively, and legs supporting said body (4) from beneath. The body (4) is provided also with handles (7) connected by means of arms. (6) in order to move said wheelbarrow.

A wheel (3) contacting the ground on the front part of the body (4) is connected thereto (4) by means of a wheel frame (9).

The body (4) of the subject wheelbarrow incorporates a double-wall structure (8) as seen from the cross-sectional illustration in Figure 1. Such body walls (8) and legs (2) are preferably manufactured from polyethylene material, whereas any other type plastic materials could be employed here as well.

Polyurethane material (5) is provided in between said double-wall structure (8) of the subject wheelbarrow. Thus the mechanical resistance of the wheelbarrow is enhanced against external loads, and the decomposition resistance of the main body, including the polyurethane body and legs, is strengthened against both UV rays and chemicals.

As seen from Figure 1, one of said double walls is directed towards the body (4), whereas the other towards the legs (2). Thus, similar to the body's (4) composition, the interior of legs (2) made of plastic material is also reinforced with polyurethane material (5).

Leg shoes (1) containing preferably rubber material are fastened to the parts of said legs (2), contacting the ground.

Stroke shoes (10) are also fastened to the front of said body (4) of the subject wheelbarrow, in order to provide protection against external strokes.

According to alternative applications of the present invention, alternative embodiments are provided, characterized in that polyurethane material (5) is incorporated only in between the walls of the double-wall structured plastic body (4), and said legs (2) and/or wheel frame (9) supporting said body (4) is/are made of materials such as iron, aluminum, etc. except plastic.

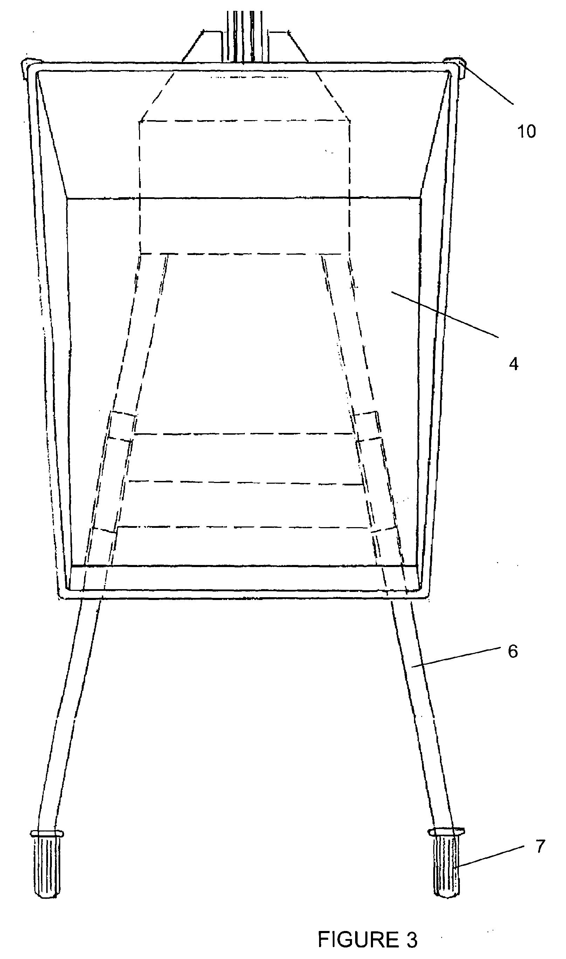

Figures 2 and 3 are front and top views, respectively, of the wheelbarrow according to the present invention, constructed with a double-wall structure of plastic material, and incorporating polyurethane material in between said walls.

## Claims

1. A wheelbarrow comprising a body (4); legs (2) and carrying arms (6) connected to the body (4); a wheel (3) and a wheel frame (9) connecting said wheel (3) to said body (4); **characterized in that** said body (4) comprises a double-wall structure (8) made of plastic material, and **in that** polyurethane (5) material is incorporated in between the walls (8).

2. A wheelbarrow comprising a body (4); legs (2) and carrying arms (6) connected to the body (4); a wheel (3) and a wheel frame (9) connecting said wheel (3) to said body (4); **characterized in that** said body (4) comprises a double-wall structure (8) made of polyethylene material, and polyurethane (5) is incorporated in between the walls (8).

3. A wheelbarrow according to any of claims 1 or 2, **characterized in that** said legs (2) connected to the double-wall structured body (4) of plastic material is made of a metal.

4. A wheelbarrow according to any of claims 1 or 2, **characterized in that** said wheel frame (9) connected to the double-wall structured body (4) of plastic material is made of a metal.

5. A wheelbarrow according to any of claims 1 or 2, **characterized in that** one of the double walls (8) is directed towards the body (4), and the other towards the legs (2), and the interior of said legs (2) is also reinforced with polyurethane.
